# EUROPEAN PATENT SPECIFICATION

(11) **EP 3 984 866 B1**
(45) Date of publication and mention of the grant of the patent: **26.11.2025**
(21) Application number: 21202526.6
(22) Date of filing: 13.10.2021
(51) Int. Cl.: B62H 3/04, B61B 11/00, B62H 3/12

(54) **TRANSPORTING UNIT OF AN AERIAL CABLE TRANSPORTATION SYSTEM WITH DEVICE FOR TRANSPORTING BICYCLES**
TRANSPORTEINHEIT EINES SEILBAHNSYSTEMS MIT VORRICHTUNG ZUM TRANSPORT VON FAHRRÄDERN
UNITÉ DE TRANSPORT D'UN SYSTÈME DE TRANSPORT PAR CÂBLE AÉRIEN AVEC DISPOSITIF DE TRANSPORT DE BICYCLETTES

(30) Priority: 13.10.2020 IT 202000024076
(43) Date of publication of application: 20.04.2022
(73) Proprietor: LEITNER S.p.A., 39049 Vipiteno (BZ) (IT)
(72) Inventor: FISCHNALLER, Hannes, 39049 Vipiteno (BZ) (IT)
(74) Representative: Studio Torta S.p.A.

(56) References cited:
- EP-A1- 1 741 623
- EP-A1- 3 317 171
- EP-A1- 3 428 016
- WO-A1-2011/101785
- WO-A1-2020/169226
- FR-A1- 2 667 559
- FR-A1- 2 958 255
- JP-A- 2006 281 910
- JP-U- H0 210 188
- US-A- 595 891
- US-A1- 2009 019 901
- US-A1- 2018 134 228

## Description

### Cross-reference to related applications

This Patent Application claims priority from Italian Patent Application No. 102020000024076 filed on October 13, 2020.

### Technical field

The technical field of the present invention relates to aerial cable transportation systems in which passengers are transported along a predefined route by means of transporting units which are fed in succession one after the other in a position suspended in the air, i.e. raised with respect to the ground below, supported by at least one cable.

Within this specific technical field, the present invention relates to a device for transporting bicycles coupled to the transporting units in use in the system to enable passengers to transport their own bicycles.

The present invention deals with the technical problem of providing a device for transporting bicycles which is simple (made of a low number of parts), which guarantees safe and stable transport of bicycles even when the diameter of the wheels varies, and which does not require the passengers to make any particular manoeuvres or excessive efforts during the procedures of loading and unloading the bicycle.

### Background

As mentioned in the previous chapter, the technical field covered by the present invention is that of aerial cable transportation systems. As is well known, such systems comprise several transporting units that are moved one after the other along a route defined by at least one cable. For the purposes of the present description, a transporting unit means not only a chair but also or any other movable unit suitable for being coupled to the innovative device which is the subject of the present invention. If the system is of the monocable type, the single cable provided performs the dual function of supporting and moving the transporting unit. In systems with at least two cables, these functions are divided into a hauling cable and at least one supporting cable. Along the track, the system includes fixed structures such as pylons or masts to support the cable in spans as well as stations where passengers can safely embark and disembark from the transporting units and load/unload bicycles. The stations at the ends of the route are known as the upstream and downstream stations. Inside the stations the transporting units are usually released from the cables and moved/supported by other devices so that they can travel slowly without having to slow down the remaining transporting units travelling outside the station along the track. However, for the purposes of the present invention it is not relevant which device (cable or not) moves and supports the transporting units inside the station, nor whether embarking takes place with the transporting units stopped or moving. In the plan view, the stations may be U-shaped, for example in the case of upstream or downstream return stations, or straight or curved/angled in the case of intermediate stations.

As mentioned in the previous chapter, the present invention relates to a device for transporting bicycles which can be coupled to transporting units to enable passengers to transport their own bicycles along the route. In particular, the technical problem of providing a device for transporting bicycles is addressed, which on the one hand consists of a low number of parts and on the other hand ensures safe and stable transport of bicycles of various sizes without requiring considerable effort from passengers during the loading and unloading procedures.

It is well known that bicycles are very bulky and difficult to transport when not in use. In cable transportation systems where the transporting units are cars, bicycles can be transported inside the cars without any particular problems. On the contrary, many problems arise when transporting units are chairs. When transporting a bicycle on the chair, the bicycle risks occupying the entire chair, making transport uncomfortable for the passenger as well as reducing the hourly capacity of the system with consequent queues at the station. There is also the problem of damage to seat covers and backrests caused by contact with the angular parts of the bicycle (e.g. pedals, chain, etc.). Moreover, it is not at all easy to load/unload the bicycle onto/off the chair without having to temporarily stop the chairs at the station. This again greatly reduces the hourly capacity of the system.

To overcome these drawbacks, it is now known to provide seats with bicycle carrying devices in the form of side or rear hooks. In the case of side hooks, the passenger and his/her bicycle can travel on the same chair. In the case of rear hooks, i.e. hooks that project in a cantilever fashion from the back of a chair towards the preceding upstream chair, the bicycle travels carried by the downstream chair "visible" to the owner travelling on the upstream chair. In this way, both during loading/unloading and during transport, the owner is in close proximity to both the bicycle and his/her chair.

An original embodiment of such bicycle carrying devices was to have only one lower retaining device in the form of two plates parallel to each other into which the front wheel of the bicycle could be inserted when lifted or wheelied vertically from the ground. The first ends of the two plates are constrained to the chair frame while the opposite ends are joined by a rear supporting device ('rear' means contact with a rear portion of the wheel when inserted between the plates). The front portion of the wheel is either directly in abutment against the chair frame or is supported by a front supporting device straddling the plates near the chair. This solution, which as described provides only a fixed lower retaining device, has the disadvantage that it does not provide for any adjustments as the wheel radius changes and in this sense the transport may be more or less stable depending on the type of bicycle being transported. Nowadays, more sophisticated systems are also known which also include other supporting devices, for example a lower supporting device placed between the rear and the front ones. However, even then the fixed lower retaining device alone does not fit the various possible wheel sizes.

In order to overcome this problem, EP3317171 describes a bicycle supporting device which, in addition to the fixed lower retaining device, also has a movable upper retaining device hinged to the chair frame which, due to the weight of the wheel, closes like a clamp on the wheel itself when transported. This movable upper retaining device comprises an upper supporting device which acts above the wheel and is operated by a linkage or articulated connection fixed to the lower retaining device.

Although this solution adapts to varying wheel sizes and ensures stable and safe transport, it is not free from drawbacks. In fact, the presence of the upper retaining device, which acts on the upper portion of the wheel like a clamp, does not make it easy to load and unload the bicycle. In fact, the user is forced not only to lift the bicycle but also to force its insertion and release in order to overcome the "closure" of the clamp created by the lower and upper retaining devices. Furthermore, the structure described in EP3317171 is very complex due to the presence of the joint that must transmit movement to the upper retaining device.

EP1741623 describes a bicycle parking device with a first fixed retainer and a second retainer that can be rotated relative to the first retainer to adapt to the wheel sizes of different bicycles.

WO2011101785 discloses a transporting unit of an aerial cable transporting system according to the preamble of claim 1.

### Description of the invention

Based on this prior art, an object of the present invention is to provide a transporting unit of an aerial cable transporting system with a bicycle transporting device capable of overcoming the disadvantages listed in the previous chapter. In particular, the present invention has the aim of providing a solution which, on the one hand, guarantees the stable and safe transport of bicycles even when the dimensions (radius and section) of the wheels vary, and on the other hand, offers an easier unloading and unloading manoeuvre. Furthermore, as will become apparent, since fewer parts or components are required, the present invention is also simple and optimal from an economic and production point of view.

In accordance with these purposes, the present invention relates to a transporting unit of an aerial cable transporting system with a device for transporting bicycles. As is well known, in such systems, which can be monocable or have two or three cables, the units follow one another along a direction of travel. According to the present invention, one, some or all of the units comprise at least one bicycle transporting device as will be described below to enable passengers to carry their bicycles on the system. Preferably, the units provided with the device of the present invention are units configured to carry passengers. More preferably, each unit is a chair comprising a seat supporting carrier, which is also coupled to a suspending arm configured to be coupled to the cable. In this context, the device(s) for carrying bicycles is/are coupled to the carrier or other portion of the seat in such a way that it projects rearwards cantilevered to the seat backs parallel to the direction of travel. In this way, a passenger with his/her own bicycle arrives at the station, lifts or wheelies the bicycle to couple the front wheel to the device in front of him/her, and once this has been done, he/she can sit on the chair immediately upstream from the one carrying the bicycle. In this way, the bicycle is always within the owner's sight and when leaving the station he/she simply has to grab it and lift it to free it from the device. Alternatively, the unit carrying the bicycles may be a unit intended for such exclusive use, i.e. not also carrying passengers. In this system, therefore, units for the transport of bicycles only are alternated with units, preferably with chairs, for transporting passengers. In such a case, the bike-only unit is reduced to just the frame coupled to the suspending arm configured for coupling to the cable. Again, preferably the device(s) for carrying bicycles is/are coupled cantilevered onto the carrier in such a way that it projects parallel to the direction of travel towards an adjacent upstream passenger transporting unit.

In particular, the device for transporting bicycles comprises:
- a first retaining device for a wheel of a bicycle cantilevered fixed mounted horizontally onto a transporting unit, wherein the first retaining device comprises a first end coupled to the transporting unit and an opposite second end provided with a rear supporting device for the wheel;
- a second retaining device coupled to the first retaining device and comprising a first end and a second end; wherein the first end projects below the first retaining device and is provided with a lower supporting device for the wheel and the second end projects above the first retaining device and is provided with a front supporting device for the wheel.

The definitions "rear", "bottom" and "front" refer to the portions of the wheel that come into contact with the device during its use. These definitions are well known to a person skilled in the art and widely used in patent literature for the same purpose. For example, patent EP3317171 proposes similar definitions in line with those used in the present application. As with EP3317171, the device of the present invention is configured to be coupled to one of the two wheels of the bicycle, preferably the front wheel to facilitate positioning which is done by lifting or wheeling the bicycle off the ground. For this purpose the device when in use is secured to the transporting unit at an appropriate height above the ground. A lower stop bar can also be provided to prevent the rear wheel from jolting when suspended in the air.

According to the present invention, the second retaining device is connected to the first one in a rotatable manner, in particular it is rotatable about a pivoting axis (parallel to the wheel axis when coupled) arranged between the first end and the second end of the first retaining device in such a way that, as the radius of the wheel varies, the angular position of the second retaining device also varies, and thus the position of the front and bottom supporting devices with respect to the first retaining device.

In this way, even with different wheel diameters, the transport is stabilised by a different and correspondingly different angular position of the second retaining device which, acting as a rocker, ensures that the wheel always touches the device at the three supporting devices. The term "always" used above implies that this changing and automatic triple support is guaranteed for all the different diameters in use today, for example between 24" and 29". The movement of the second rocker device is directly actuated by the wheel during the step of coupling to the device. As the pivoting axis is located between the lower and front supporting devices, the wheel acts against the lower supporting device, which is moved by the weight of the wheel until the front supporting device is also in contact with the wheel. Since there is no upper supporting device, the wheel is free at the top and therefore the unloading manoeuvres at the end of the route are very simple and only involve lifting the bike without requiring any force other than that due to the weight of the bicycle itself.

Both the first and the second retaining device are made in the form of two facing plates to ensure ideal lateral restraint of the wheel.

Preferably, the rear supporting device is made in the form of an idler roller with a smaller radius in the central portion than in the lateral portions. The axis of the roller is parallel to the pivoting axis of the second retaining device. If the first retaining device is made in the form of two facing plates, the roller joins their free ends and gives solidity to the structure.

Preferably, the second end of the first retaining device, i.e., the end that first contacts the wheel during the loading stages, comprises inclined lips configured to center the wheel towards the inside of the device.

The above mentioned lips are only one of several other possible solutions to center the wheel towards the inside of the device and to allow stable transport even when the wheel tube section changes. Indeed, the lower supporting device can be made in the form of a V-shaped seat, similarly the front supporting device can be made in the form of a V-shaped seat and also the second end of the second retaining device comprises inclined lips configured to center the wheel towards the inside of the device.

Of course, each of the above wheel centering solutions can be present independently of the others.

According to the invention, the rotation of the second retaining device is limited between two stroke end positions. This limitation is achieved by equipping the second retaining device with pins housed in suitably shaped slots obtained in the first retaining device. In no position of the second retaining device does the front supporting device ever project beyond the first end of the first retaining device in a direction towards the frame. This prevents the wheel from hitting the carrier when the unit is travelling.

In order to increase this distance between the front supporting device and the frame, preferably the second retaining device comprises two portions on opposite sides of the pivoting axis where these two portions are angled towards each other to create an angle less than 180° towards the wheel.

Finally, preferably the bicycle carrying device may further comprise a third retaining device, extending substantially vertically in the form of a bar, comprising a first end coupled to the first end of the first retaining device and a second opposite and lowered end provided with a supporting or contacting device for the other wheel of the bicycle.

### Brief description of the drawings

Further characteristics and advantages of the present invention will become clear from the following description of a non-limiting example of an embodiment thereof, with reference to the figures of the attached drawings, in which:
- figure 1 shows an example of a transporting unit for an aerial cable transporting system provided with an example of a device for transporting bicycles according to the present invention;
- figure 2 shows the unit of figure 1 in which a bicycle has been coupled to the bicycle transporting device;
- figures 3-5 show a perspective view, a side view and a front view, respectively, of the bicycle transporting device of figures 1 and 2 isolated from the transporting unit;
- figures 6 and 7 show the use of the device for transporting bicycles of the previous figures with two different wheel diameters.

### Description of an embodiment of the invention

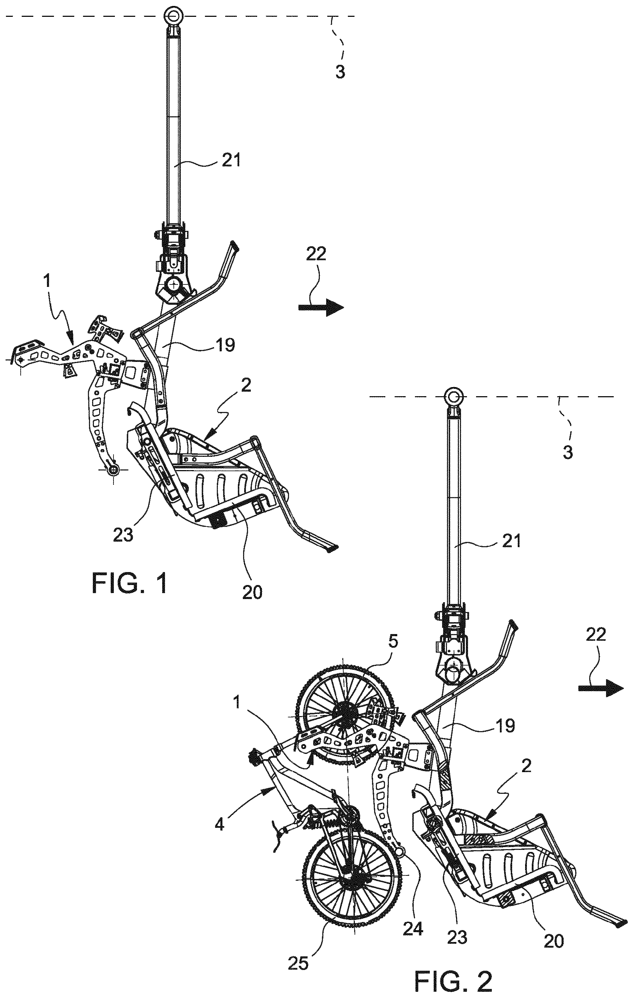

As mentioned in the previous chapter, the present invention relates to a transporting unit of an aerial cable transporting system with a device for transporting bicycles. The shape of the transporting unit does not necessarily coincide with a chair as shown by way of example in the appended figures. Figures 1 and 2 are only examples of a chair-type transporting unit in which the understanding of the present invention is more immediate and the manoeuvres required of the passengers are simpler. In particular, in these figures, reference number 2 indicates the chair in general, i.e., an assembly comprising a row of seats placed side by side in a direction transverse to the direction 22 of travel of the chair. In addition to the chairs, which comprise a seat 20 and a backrest 23, the chair comprises a carrier 19 which supports the seats themselves and which is coupled to a suspending arm 21 configured for coupling to the cable, shown by reference number 3 in figures 1 and 2. Everything described so far with reference to figures 1 and 2 is well known to a person skilled in the art. Figures 1 and 2 further show the presence of a device for transporting bicycles indicated by reference number 1 which is coupled to the unit 2, preferably to the carrier, cantilevered along the direction 22 towards the adjacent upstream unit (not shown) on which the bicycle passenger will travel. Both the arrangement of the device 1 in relation to chair 2 and the fact that several devices 1 may be provided side by side along the transverse direction is known in the prior art. Figure 2 shows a bicycle 4 being transported which has been previously lifted/wheelied in order to couple the front wheel 5 with a device 1. Reference number 24 indicates a lower crossbar configured to act as a stop for the rear wheel 25 in order to prevent oscillations or impacts of the wheel 25 against the chair 2.

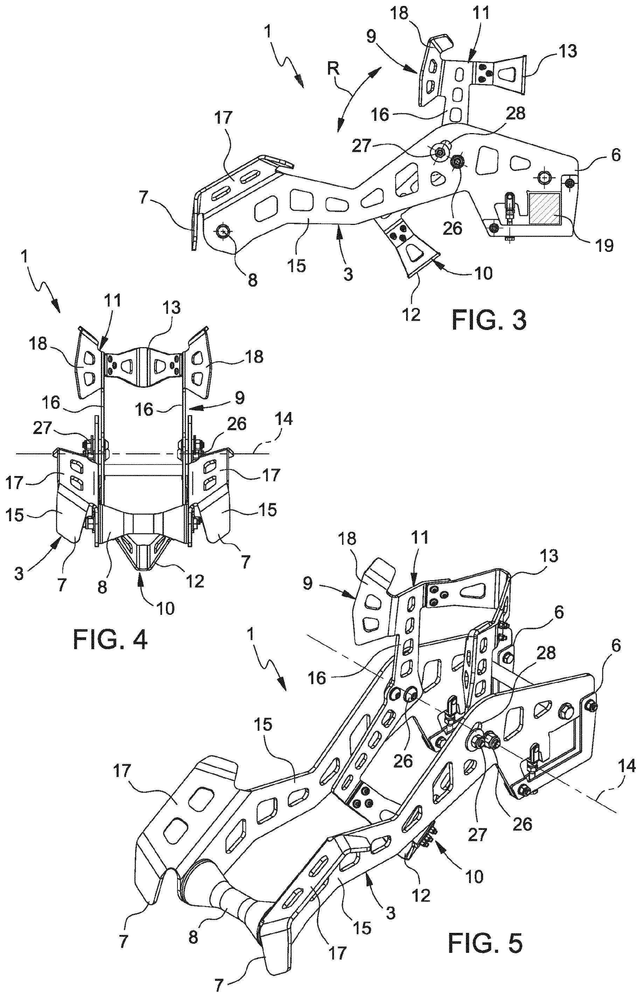

Figures 3-5 show enlarged views of the device 1 for transporting bicycles of figures 1 and 2 isolated from the transporting unit 2, in particular a perspective view, a side view and a front view. As can be seen in said figures, the device comprises a first retaining device 3 for the wheel 5 of the bicycle 4 made in the form of two plates 15 facing each other (parallel to the direction of travel 22 during use). Said first retaining device 3 is configured to be cantilevered fixed mounted on the transporting unit 2, in particular coupled to a crossbar of the carrier 19 (shown only schematically in figure 4). The first retaining device 3 extends substantially parallel to the direction of travel 22, i.e. horizontally, and comprises a first end 6 configured to be coupled to the transporting unit 2 and an opposite second end 7 provided with a rear supporting device 8 for the wheel 5. This rear supporting device 8 is realized in the form of an idler roller having a transverse axis with respect to the direction of travel 22 and joining the free ends 7 of the plates 15. As can be seen more clearly in figures 5 and 3, such free ends 7 of the plates 15 are also provided with downwardly inclined lips 14 configured to center the wheel 5 towards the center of the device 1 i.e. between the two plates 15. The device 1 further comprises a second retaining device 9 connected to the first one 3 and also realized in the example shown in the form of two facing plates 16. This retaining device 9 comprises a first end 10 and a second end 11. The first end 10 projects below the first retaining device 3 and is provided with a lower supporting device 12 for the wheel 5 in the form of a V-shaped seat joining the two plates 16. The second end 11 projects above the first retaining device 3 and is provided with a front supporting device 13 for the wheel 5 forming a V-shaped seat joining the two plates 16. The second retaining device 9 is rotatably connected (rotation R) with respect to the first retaining device 3 about pins 26 defining a pivoting axis 14 transverse to the direction of travel 22, which are arranged between the first end 7 and the second end 6 of the first retaining device 3. Since the lower supporting device 12 and the front supporting device 13 are on opposite sides with respect to the axis 14 along the direction of travel 22, as the radius of the wheel 5 inserted in the device 1 varies, the angular position of the second retaining device 9 (acting as a rocker) and therefore the position of the front 13 and lower 12 supporting devices varies correspondingly with respect to the first retaining device 3. In the example shown, the second ends 11 of the flanges 16 of the second retaining device 9 also comprise inclined lips 18 for centering the wheel. The rotation of the second retaining device 9 about the axis 14 is limited by the presence of second pins 27 integral with the plates 16 housed inside slots 28 obtained on the plates 15 of the first retaining device 3. As shown, the front supporting device 13 never projects towards the carrier beyond the first end 6 of the first retaining device in order to prevent impacts between the wheel 5 and the transporting unit. Preferably, the second retaining device 9 does not have a straight extension but is angled, i.e. two portions of the device depart from the axis 14 which are not aligned with each other. In particular, the portion supporting the front supporting device 13 is angled towards the opposite portion so that towards the wheel 5 the two portions of the second retaining device 9 form an angle less than 180°. This solution makes it possible to move the front supporting device 13 further away from the frame 19, to which the first end 6 of the first retaining device is coupled, in order to prevent impacts between the wheel 5 and the carrier 19.

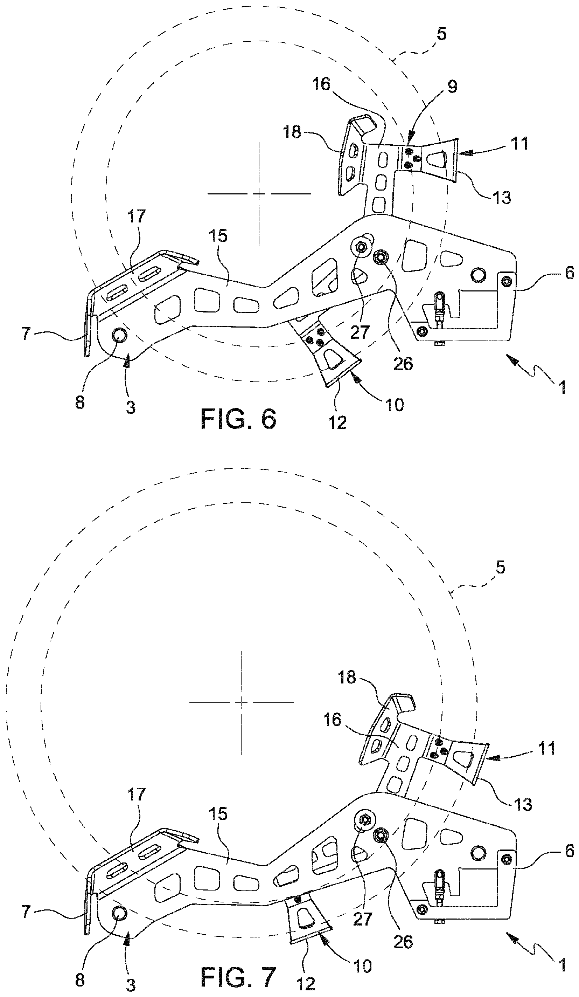

Finally, figures 6 and 7 show two different angular positions of the second retaining device 9 in which these positions are reached automatically by the mere fact of having inserted wheels of different sizes into the device 1. It is clear that even when the radius of the wheels varies, there is still stable support at the three rear (fixed), front and lower (movable) supporting devices.

Finally, it is clear that modifications and variations can be made to the invention described here without departing from the scope of the accompanying claims.

## Claims

1. A transporting unit (2) for an aerial cable transporting system (3); wherein the transporting unit (2) is configured to advance along a travel direction (22) and comprises a carrier (19) coupled to a suspending arm (21) configured for coupling to the cable (3), the transporting unit comprising a device (1) for transporting bicycles (4); the device (1) for transporting bicycles (4) comprising:
- a first retaining device (3) for a wheel (5) of a bicycle (4) cantilevered fixed mounted to the carrier (19) so as to project towards an adjacent upstream unit parallel to the direction of travel (22), wherein the first retaining device (3) comprises a first end (6) coupled to the carrier (19) and to an opposite second end (7) provided with a rear supporting device (8) for the wheel (5);
**characterizing in that** the device (1) for transporting bicycles (4) moreover comprises:
- a second retaining device (9) coupled to the first retaining device (3) and comprising a first end (10) and a second end (11); wherein the first end (10) projects below the first retaining device (3) and is provided with a lower supporting device (12) for the wheel (5) and the second end (11) projects above the first retaining device (3) and is provided with a front supporting device (13) for the wheel (5);
wherein the second retaining device (9) is pivoting with respect to the first retaining device (3) about a pivoting axis (14) arranged between the first end (6) and the second end (7) of the first retaining device (3) so that by varying the radius of the wheel (5) the position of the front supporting device (13) and lower supporting device (12) vary with respect to the first retaining device (3);
wherein at no position of the second retaining device (9) does the front supporting device (13) ever project beyond the first end (6) of the first retaining device along a travel direction of the carrier (19);
wherein the first retaining device (3) and the second retaining device (9) are each made in the form of two facing plates (15, 16) for laterally housing the wheel (5);
wherein the rotation of the second retaining device (9) is limited between two stroke end positions by the presence of pins (27) integral with the plates (16) of the second retaining device (9) housed inside shaped slots (28) obtained on the plates (15) of the first retaining device (3).

2. Unit (2) as claimed in the preceding claim, wherein the second retaining device (9) comprises two portions on opposite sides with respect to the pivoting axis (14), the two portions being angled towards each other to form an angle less than 180° towards the wheel (5).

3. Unit (2) as claimed in any one of the preceding claims, wherein the device (1) for transporting bicycles (4) comprises a third retaining device extending substantially vertically in the form of a bar and comprising a first end coupled to the first end of the first retaining device and a second end provided with a supporting device (24) for the other wheel of the bicycle.

4. Unit (2) as claimed in any one of the preceding claims, wherein the rear supporting device (8) is made in the form of an idler roller (8) having in the central portion a smaller radius than in the lateral portions, the axis of the roller (8) being parallel to the pivoting axis (14).

5. Unit (2) as claimed in any one of the preceding claims, wherein the second end (7) of the first retaining device (3) comprises inclined lips (17) for centering the wheel.

6. Unit (2) as claimed in any one of the preceding claims, wherein the lower supporting device (12) comprises a V-shaped seat for centering the wheel.

7. Unit (2) as claimed in any one of the preceding claims, wherein the front supporting device (13) comprises a V-shaped seat for centering the wheel.

8. Unit (2) as claimed in any one of the preceding claims, wherein the second end (11) of the second retaining device (9) comprises inclined lips (18) for centering the wheel.

9. Unit (2) as claimed in any one of the preceding claims, wherein the unit (2) is a chair (2), the carrier (19) supporting the seats (20) comprising a back (23); the device (1) for transporting bicycles (4) being coupled to the carrier (19) so that it posteriorly projects with respect to the backs (23) of the seats (20).

## Patentansprüche

1. Transporteinheit (2) für ein Luftseiltransportsystem (3); wobei die Transporteinheit (2) konfiguriert ist, sich entlang einer Fahrtrichtung (22) vorzubewegen, und einen Träger (19) umfasst, der mit einem Aufhängungsarm (21) gekoppelt ist, der zum Koppeln mit dem Seil (3) konfiguriert ist, wobei die Transporteinheit eine Vorrichtung (1) zum Transportieren von Fahrrädern (4) umfasst; wobei die Vorrichtung (1) zum Transportieren von Fahrrädern (4) umfasst:
- eine erste Haltevorrichtung (3) für ein Rad (5) eines Fahrrads (4), die freitragend an dem Träger (19) fest montiert ist, um parallel zur Fahrtrichtung (22) in Richtung einer benachbarten vorgelagerten Einheit vorzustehen, wobei die erste Haltevorrichtung (3) ein erstes Ende (6), das mit dem Träger (19) gekoppelt ist, und ein gegenüberliegendes bzw. entgegengesetztes zweites Ende (7) umfasst, das mit einer hinteren Stützvorrichtung (8) für das Rad (5) versehen ist;
**dadurch gekennzeichnet, dass** die Vorrichtung (1) zum Transportieren von Fahrrädern (4) ferner umfasst:
- eine zweite Haltevorrichtung (9), die mit der ersten Haltevorrichtung (3) gekoppelt ist und ein erstes Ende (10) und ein zweites Ende (11) umfasst; wobei das erste Ende (10) unterhalb der ersten Haltevorrichtung (3) vorsteht und mit einer unteren Stützvorrichtung (12) für das Rad (5) versehen ist, und das zweite Ende (11) oberhalb der ersten Haltevorrichtung (3) vorsteht und mit einer vorderen Stützvorrichtung (13) für das Rad (5) versehen ist;
wobei die zweite Haltevorrichtung (9) in Bezug auf die erste Haltevorrichtung (3) um eine zwischen dem ersten Ende (6) und dem zweiten Ende (7) der ersten Haltevorrichtung (3) angeordnete Schwenkachse (14) schwenkt, sodass durch Verändern des Radius des Rades (5) die Position der vorderen Stützvorrichtung (13) und der unteren Stützvorrichtung (12) in Bezug auf die erste Haltevorrichtung (3) variiert;
wobei die vordere Stützvorrichtung (13) niemals an einer Position der zweiten Haltevorrichtung (9) über das erste Ende (6) der ersten Haltevorrichtung entlang einer Fahrtrichtung des Trägers (19) vorsteht;
wobei die erste Haltevorrichtung (3) und die zweite Haltevorrichtung (9) jeweils in der Form von zwei zugewandten Platten (15, 16) zum lateralen Aufnehmen des Rades (5) ausgebildet sind;
wobei die Drehung der zweiten Haltevorrichtung (9) zwischen zwei Hubendstellungen durch das Vorhandensein von Stiften (27) begrenzt wird, die integral mit den Platten (16) der zweiten Haltevorrichtung (9) sind und innerhalb geformter Schlitze (28) aufgenommen sind, die an den Platten (15) der ersten Haltevorrichtung (3) erhalten bzw. ausgebildet sind.

2. Einheit (2) nach dem vorhergehenden Anspruch, wobei die zweite Haltevorrichtung (9) zwei Abschnitte auf gegenüberliegenden bzw. entgegengesetzten Seiten in Bezug auf die Schwenkachse (14) umfasst, wobei die beiden Abschnitte zueinander abgewinkelt sind, um einen Winkel von weniger als 180° zu dem Rad (5) zu bilden.

3. Einheit (2) nach einem der vorhergehenden Ansprüche, wobei die Vorrichtung (1) zum Transportieren von Fahrrädern (4) eine dritte Haltevorrichtung umfasst, die sich im Wesentlichen vertikal in der Form einer Stange erstreckt und ein erstes Ende, das mit dem ersten Ende der ersten Haltevorrichtung gekoppelt ist, und ein zweites Ende umfasst, das mit einer Stützvorrichtung (24) für das andere Rad des Fahrrads versehen ist.

4. Einheit (2) nach einem der vorhergehenden Ansprüche, wobei die hintere Stützvorrichtung (8) in der Form einer Trag- bzw. Umlenkrolle (8) ausgebildet ist, die in dem zentralen Abschnitt einen kleineren Radius als in den lateralen Abschnitten aufweist, wobei die Achse der Rolle (8) parallel zu der Schwenkachse (14) ist.

5. Einheit (2) nach einem der vorhergehenden Ansprüche, wobei das zweite Ende (7) der ersten Haltevorrichtung (3) geneigte Lippen (17) zum Zentrieren des Rads aufweist.

6. Einheit (2) nach einem der vorhergehenden Ansprüche, wobei die untere Stützvorrichtung (12) einen V-förmigen Sitz zum Zentrieren des Rads aufweist.

7. Einheit (2) nach einem der vorhergehenden Ansprüche, wobei die vordere Stützvorrichtung (13) einen V-förmigen Sitz zum Zentrieren des Rads aufweist.

8. Einheit (2) nach einem der vorhergehenden Ansprüche, wobei das zweite Ende (11) der zweiten Haltevorrichtung (9) geneigte Lippen (18) zum Zentrieren des Rads aufweist.

9. Einheit (2) nach einem der vorhergehenden Ansprüche, wobei die Einheit (2) ein Stuhl (2) ist, wobei der Träger (19) die Sitze (20) stützt bzw. trägt, die eine Rückenlehne (23) umfassen; wobei die Vorrichtung (1) zum Transportieren von Fahrrädern (4) so mit dem Träger (19) gekoppelt ist, dass sie nach hinten in Bezug auf die Rückenlehnen (23) der Sitze (20) vorsteht.

## Revendications

1. Unité de transport (2) pour un système de transport aérien par câble (3) ; dans lequel l'unité de transport (2) est configurée pour avancer le long d'une direction de déplacement (22) et comprend un support (19) couplé à un bras de suspension (21) configuré pour se coupler au câble (3), l'unité de transport comprenant un dispositif (1) pour transporter des bicyclettes (4) ; le dispositif (1) pour transporter des bicyclettes (4) comprenant :
un premier dispositif de retenue (3) pour une roue (5) d'une bicyclette (4) monté de manière fixe en porte-à-faux sur le support (19) afin de faire saillie vers une unité en amont adjacente parallèle à la direction de déplacement (22), dans laquelle le premier dispositif de retenue (3) comprend une première extrémité (6) couplée au support (19) et à une deuxième extrémité (7) opposée prévue avec un dispositif de support arrière (8) pour la roue (5) ;
**caractérisée en ce que** le dispositif (1) pour transporter des bicyclettes (4) comprend de plus :
un deuxième dispositif de retenue (9) couplée au premier dispositif de retenue (3) et comprenant une première extrémité (10) et une deuxième extrémité (11) ; dans lequel la première extrémité (10) fait saillie au-dessous du premier dispositif de retenue (3) et est prévue avec un dispositif de support inférieur (12) pour la roue (5) et la deuxième extrémité (11) fait saillie au-dessus du premier dispositif de retenue (3) et est prévue avec un dispositif de support avant (13) pour la roue (5) ;
dans laquelle le deuxième dispositif de retenue (9) pivote par rapport au premier dispositif de retenue (3) autour d'un axe de pivotement (14) agencé entre la première extrémité (6) et la deuxième extrémité (7) du premier dispositif de retenue (3), de sorte qu'en modifiant le rayon de la roue (5), la position du dispositif de support avant (13) et du dispositif de support inférieur (12) varie par rapport au premier dispositif de retenue (3) ;
dans laquelle, dans aucune position du deuxième dispositif de retenue (9), le dispositif de support avant (13) ne fait jamais saillie au-delà de la première extrémité (6) du premier dispositif de retenue le long d'une direction de déplacement du support (19) ;
dans laquelle le premier dispositif de retenue (3) et le deuxième dispositif de retenue (9) sont chacun réalisés sous la forme de deux plaques se faisant face (15, 16) pour loger latéralement la roue (5) ;
dans laquelle la rotation du deuxième dispositif de retenue (9) est limitée entre deux positions de fin de course par la présence de broches (27) solidaires avec les plaques (16) du deuxième dispositif de retenue (9) logées à l'intérieur de fentes formées (28) obtenues sur les plaques (15) du premier dispositif de retenue (3).

2. Unité (2) selon la revendication précédente, dans laquelle le deuxième dispositif de retenue (9) comprend deux parties sur des côtés opposés par rapport à l'axe de pivotement (14), les deux parties étant coudées l'une vers l'autre afin de former un angle inférieur à 180° vers la roue (5).

3. Unité (2) selon l'une quelconque des revendications précédentes, dans laquelle le dispositif (1) pour transporter des bicyclettes (4) comprend un troisième dispositif de retenue s'étendant sensiblement verticalement sous la forme d'une barre et comprenant une première extrémité couplée à la première extrémité du premier dispositif de retenue et une deuxième extrémité prévue avec un dispositif de support (24) pour l'autre roue de la bicyclette.

4. Unité (2) selon l'une quelconque des revendications précédentes, dans laquelle le dispositif de support arrière (8) est réalisé sous la forme d'un galet fou (8) ayant, dans la partie centrale, un plus petit rayon que dans les parties latérales, l'axe du galet (8) étant parallèle à l'axe de pivotement (14).

5. Unité (2) selon l'une quelconque des revendications précédentes, dans laquelle la deuxième extrémité (7) du premier dispositif de retenue (3) comprend des lèvres inclinées (17) pour le centrage de la roue.

6. Unité (2) selon l'une quelconque des revendications précédentes, dans laquelle le dispositif de support inférieur (12) comprend un siège en forme de V pour centrer la roue.

7. Unité (2) selon l'une quelconque des revendications précédentes, dans laquelle le dispositif de support avant (13) comprend un siège en forme de V pour centrer la roue.

8. Unité (2) selon l'une quelconque des revendications précédentes, dans laquelle la deuxième extrémité (11) du deuxième dispositif de retenue (9) comprend des lèvres inclinées (18) pour centrer la roue.

9. Unité (2) selon l'une quelconque des revendications précédentes, dans laquelle l'unité (2) est un fauteuil (2), le support (19) supportant les sièges (20) comprenant un dossier (23) ; le dispositif (1) pour transporter les bicyclettes (4) étant couplé au support (19) de sorte qu'il fait saillie vers l'arrière par rapport aux dossiers (23) des sièges (20).
